# EUROPEAN PATENT APPLICATION

(11) **EP 4 803 960 A1**
(43) Date of publication of application: **09.09.2026**
(21) Application number: 24890028.4
(22) Date of filing: 23.05.2024
(51) Int. Cl.: G03B 21/20

(54) **OPTOMECHANICAL DEVICE, VEHICLE LIGHT MODULE, AND VEHICLE**

(30) Priority: 15.11.2023 CN 202311547771
(71) Applicant: Yinwang Intelligent Technologies Co., Ltd., Shenzhen, Guangdong 518110 (CN)
(72) Inventor: LUO, Wenzheng, Shenzhen, Guangdong 518129 (CN); HUANG, Zhiyang, Shenzhen, Guangdong 518129 (CN); JIA, Lirui, Shenzhen, Guangdong 518129 (CN)
(74) Representative: Gill Jennings & Every LLP
(86) International application number: PCT/CN2024/095027
(87) International publication number: WO 2025/102657

(57) **Abstract**

An optical engine (100), a vehicle light module (200), and a transportation means are disclosed, and pertain to the field of optical engine technologies. The optical engine (100) includes a light source unit (10), an imaging unit (30), a reflective unit (20), a lens (40), and an integrally formed body (50). The body (50) is provided with a first opening (51), a second opening (52), a third opening (53), and a fourth opening (54). Any one of the first opening (51), the second opening (52), the third opening (53), and the fourth opening (54) communicates with an interior and an exterior of the body (50). The light source unit (10) is disposed at the first opening (51) and is connected to the body (50). The reflective unit (20) is disposed at the second opening (52) and is connected to the body (50). The imaging unit (30) is disposed at the third opening (53) and is connected to the body (50). The lens (40) is disposed at the fourth opening (54) and is connected to the body (50). In the optical engine (100), the body (50) supports components such as the light source unit (10) and the reflective unit (20), so that a quantity of parts of the optical engine (100) can be reduced, and production efficiency of the optical engine (100) can be further improved.

## Description

This application claims priority to Chinese Patent Application No. 202311547771.8, filed with the China National Intellectual Property Administration on November 15, 2023 and entitled "OPTICAL ENGINE, VEHICLE LIGHT MODULE, AND TRANSPORTATION MEANS", which is incorporated herein by reference in its entirety.

### TECHNICAL FIELD

Embodiments of this application relate to the field of optical engine technologies, and in particular, to an optical engine, a vehicle light module, and a transportation means.

### BACKGROUND

At present, an optical engine includes a lens, an optical component, a light source, a projection chip, and a body. The body includes a plurality of mechanical parts. The optical component includes a plurality of optical elements. Each optical element is connected to the body by using an optical bracket. The optical component is configured to: collimate a light beam emitted by the light source and transmit the collimated light beam to the projection chip. The projection chip is a digital micromirror device, and is configured to process the received light beam, to output imaging light to be projected onto the lens. However, because the optical engine has a large quantity of parts, an assembly process of the optical engine is complex, which reduces production efficiency of the optical engine. Therefore, how to improve production efficiency of the optical engine becomes an urgent problem to be resolved.

### SUMMARY

Embodiments of this application provide an optical engine, a vehicle light module, and a transportation means, so that a quantity of parts in the optical engine can be reduced, to improve production efficiency of the optical engine.

A first aspect of this application provides an optical engine, including a light source unit, an imaging unit, a reflective unit, a lens, and an integrally formed body. The body is provided with a first opening, a second opening, a third opening, and a fourth opening, and any one of the first opening, the second opening, the third opening, and the fourth opening communicates with an interior and an exterior of the body. The light source unit is disposed at the first opening and is connected to the body, the reflective unit is disposed at the second opening and is connected to the body, the imaging unit is disposed at the third opening and is connected to the body, and the lens is disposed at the fourth opening and is connected to the body. The reflective unit is configured to reflect, to the imaging unit, light emitted by the light source unit, and the imaging unit is configured to output, based on the light reflected by the reflective unit, imaging light directed toward the lens.

In the optical engine provided in this embodiment of this application, the integrally formed body supports the light source unit, the imaging unit, the reflective unit, and the lens, so that a quantity of parts in the optical engine can be reduced, an assembly process of the optical engine can be simplified, and production efficiency of the optical engine can be further improved. In addition, because the light source unit, the imaging unit, the reflective unit, and the lens are all connected to the body, a length of a tolerance chain after assembly of the optical engine can be shortened, so that an assembly error of the optical engine can be reduced, and performance of the optical engine can be further improved. Besides, because the body is integrally formed, production costs of the body can be further reduced, thereby lowering production costs of the optical engine.

In a possible implementation, the light source unit includes a light source and at least one collimating lens, the light source is connected to the body, at least a part of each collimating lens is disposed inside the first opening, and each collimating lens is disposed on an optical path between the light source and the reflective unit and is connected to the body.

In the optical engine provided in this embodiment of this application, at least the part of each collimating lens is disposed inside the first opening, so that the first opening can be used to hide the collimating lens on a premise of collimating light emitted by the light source, and an integration level of the optical engine can be improved. This facilitates miniaturization of the optical engine.

In a possible implementation, at least one annular step surface is provided on an inner wall of the first opening, and each annular step surface corresponds to one collimating lens and is used to support the corresponding collimating lens.

During assembly of the optical engine provided in this embodiment of this application, the annular step surface may cooperate with the collimating lens to determine a relative position between the collimating lens and the body, so that a difficulty in assembling the collimating lens and the body can be reduced, and production efficiency of the optical engine can be further improved. In addition, the annular step surface may alternatively be bonded to a bottom surface of the collimating lens, so that reliability of connecting the body to the collimating lens is increased.

In a possible implementation, a plurality of first protrusion parts are further disposed on the body, the plurality of first protrusion parts are disposed inside the first opening, each collimating lens corresponds to the plurality of first protrusion parts, and each first protrusion part is in contact with a side wall of the corresponding collimating lens.

During assembly of the optical engine provided in this embodiment of this application, the first protrusion part may be in contact with the side wall of the collimating lens, so that the relative position between the collimating lens and the body can be determined, and a mounting speed of the collimating lens can be further improved.

In a possible implementation, the reflective unit includes a bracket and a reflective element, the reflective element is disposed inside the body and is connected to the body by using the bracket, and the reflective element is configured to reflect, to the imaging unit, the light emitted by the light source unit.

During assembly of the optical engine provided in this embodiment of this application, the reflective element can be mounted on the body by using the bracket, so that the reflective element can be disposed inside the body, to reflect, to the imaging unit, the light emitted by the light source unit. In addition, the bracket and the reflective element may alternatively be assembled into the reflective unit in advance and then connected to the body, so that a quantity of assembly times of the optical engine can be reduced and assembly efficiency of the optical engine can be further improved.

In a possible implementation, one of the reflective element and the bracket includes a first hole, and the other one of the reflective element and the bracket includes a first positioning part at least partially disposed inside the first hole.

During assembly of the reflective unit, the first positioning part is inserted into the first hole, so that a relative position between the reflective element and the bracket can be determined. In this way, after the bracket is connected to the body, a relative position relationship between the reflective element and the body can be ensured, and position precision of the reflective element, the light source unit, and the imaging unit can be further ensured.

In a possible implementation, one of the bracket and the body includes a second hole, and the other one of the bracket and the body includes a second positioning part at least partially disposed inside the second hole.

During assembly of the optical engine, the second positioning part is inserted into the second hole, so that a relative position between the bracket and the body can be determined. In this way, the relative position between the reflective element and the body can be ensured, and position precision of the reflective element, the light source unit, and the imaging unit can be further ensured.

In a possible implementation, the imaging unit includes a circuit board and an imaging element, the circuit board is disposed outside the body and is connected to the body, the imaging element is connected to the circuit board and is disposed at the third opening, and the imaging element is configured to output, based on the light reflected by the reflective unit, the imaging light directed toward the lens.

In the optical engine provided in this embodiment of this application, the circuit board is disposed outside the body, so that a difficulty in connecting the circuit board to the body can be reduced, and a heat dissipation requirement of the imaging unit can be further met.

In a possible implementation, a projection of the imaging element covers the third opening in a first direction, and the imaging element can seal the third opening by shielding the third opening. This helps reduce a difficulty in sealing the third opening.

In a possible implementation, the body is further provided with an accommodating slot for accommodating at least a part of the imaging element, and the accommodating slot communicates with the interior of the body via the third opening.

During assembly of the optical engine, a relative position between the imaging unit and the body may be roughly determined by using the accommodating slot, to improve a mounting speed of the imaging unit. In addition, the accommodating slot may cooperate with the imaging element, to improve sealing performance between the imaging unit and the body.

In a possible implementation, the optical engine further includes an elastic component of an annular structure, and the elastic component is disposed between the body and the imaging element and is in contact with the imaging element and the body.

In the optical engine provided in this embodiment of this application, the elastic component is disposed between the body and the imaging element, so that sealing performance between the imaging element and the body can be improved. In addition, because the elastic component can be elastically deformed, the imaging element is in soft contact with the elastic component, so that hard contact between the imaging element and the body can be avoided, and the imaging element can be further prevented from being damaged.

In a possible implementation, one of the body and the elastic component includes a third hole, and the other one of the body and the elastic component includes a third positioning part at least partially disposed inside the third hole.

During assembly of the optical engine, the third positioning part is inserted into the third hole, so that a relative position between the elastic component and the body can be determined, and a mounting speed of the elastic component can be improved. In addition, the elastic component and the imaging unit may alternatively be assembled into one component in advance, so that a quantity of assembly times of the optical engine can be reduced and an assembly speed of the optical engine can be further improved.

In a possible implementation, a part of the lens is disposed inside the fourth opening and is in threaded connection to the body, so that a difficulty in connecting the lens to the body can be reduced on a promise of connecting the lens to the body. In addition, a focal length of the lens may be adjusted by rotating the lens, so that a difficulty in adjusting the focal length can be reduced. Besides, at least a part of the lens is disposed inside the fourth opening, so that a size of the optical engine in the first direction can be reduced. This facilitates miniaturization of the optical engine.

In a possible implementation, the optical engine further includes a heat dissipation apparatus, the heat dissipation apparatus includes a first heat dissipation member, a second heat dissipation member, and a heat pipe fitting, one end of the heat pipe fitting is disposed inside the first heat dissipation member and is connected to the first heat dissipation member, the other end of the heat pipe fitting is disposed inside the second heat dissipation member and is connected to the second heat dissipation member, the first heat dissipation member covers a light source of the light source unit and is connected to the body, and the second heat dissipation member covers the imaging unit and is connected to the body.

In the optical engine provided in this embodiment of this application, the heat dissipation apparatus including the first heat dissipation member, the second heat dissipation member, and the heat pipe fitting may perform heat dissipation on the imaging unit and the light source, so that a temperature of the imaging unit and a temperature of the light source are within a proper range. In addition, the heat pipe fitting may transfer, to the second heat dissipation member, heat that is transferred from the light source to the first heat dissipation member, so that a structure of the first heat dissipation member can be simplified while heat dissipation of the light source is ensured. This can avoid an excessively complex structure of the first heat dissipation member, or avoid an excessively large size of the optical engine in a second direction caused by an excessively large size of the first heat dissipation member in the second direction. In addition, because the second heat dissipation member is disposed at one end of the body, the second heat dissipation member is properly designed, so that an excessively large size of the second heat dissipation member in the second direction can be avoided while heat dissipation requirements of the light source and the imaging unit are met. This can reduce a volume of the optical engine.

In a possible implementation, an avoidance notch is further provided on the body, and the avoidance notch is used to avoid the first heat dissipation member and the heat pipe fitting.

The avoidance notch is provided to avoid the heat pipe fitting, so that a length of the heat pipe fitting can be reduced. This helps improve a heat transfer speed of the heat pipe fitting. In addition, during assembly of the optical engine, the heat dissipation apparatus may alternatively move toward the body in the first direction to enabling docking between the heat dissipation apparatus and the body, to improve an assembly speed between the heat dissipation apparatus and the body.

In a possible implementation, a projection of the body covers a projection of the first heat dissipation member in the second direction, and the first heat dissipation member is disposed between two opposite ends of the body, so that the excessively large size of the optical engine caused by the excessively large size of the first heat dissipation member can be avoided while the heat dissipation requirement of the light source is met. This helps implement miniaturization of the optical engine. The first direction is perpendicular to the second direction, and a direction of an optical axis of the lens is defined as the first direction.

In a possible implementation, one of the body and the first heat dissipation member includes a positioning structure, and the other one of the body and the first heat dissipation member includes a fourth positioning part. The positioning structure is configured to cooperate with the fourth positioning part to determine a relative position between the body and the first heat dissipation member.

During assembly of the optical engine, the relative position between the first heat dissipation member and the body can be determined through cooperation between the positioning structure and the fourth positioning part, to improve the assembly speed between the heat dissipation apparatus and the body.

In a possible implementation, the positioning structure is a positioning notch provided on the first heat dissipation member, and the body includes the fourth positioning part inserted into the positioning notch.

During assembly of the optical engine, the heat dissipation apparatus may move toward the body in the first direction until the fourth positioning part is inserted into the positioning notch, so that the first heat dissipation member and the body can be quickly positioned, and the assembly speed between the heat dissipation apparatus and the body can be further improved.

In a possible implementation, one of the second heat dissipation member and the body is provided with a positioning hole, and the other one of the second heat dissipation member and the body is disposed with a fifth positioning part configured to be inserted into the positioning hole.

During assembly of the optical engine, a relative position between the body and the second heat dissipation member is determined through cooperation between the positioning hole and the fifth positioning part, so that a relative position between the heat dissipation apparatus and the body can be determined, and assembly efficiency of the heat dissipation apparatus and the body can be further improved.

In a possible implementation, the second heat dissipation member includes a second protrusion part, a projection of the second protrusion part overlaps a projection of the imaging element of the imaging unit in the first direction, and a gap exists between the second protrusion part and the imaging element of the imaging unit or the second protrusion part is in contact with the imaging element.

In the optical engine provided in this embodiment of this application, the second protrusion part close to the imaging element is disposed, so that the imaging element can perform heat exchange with the second heat dissipation member, to improve a heat dissipation capability of the imaging element.

A second aspect of this application provides a vehicle light module, including a housing and the optical engine according to any implementation of the first aspect, where at least a part of the optical engine is disposed inside the housing.

The vehicle light module in this embodiment of this application can improve production efficiency and optical performance of the optical engine by using an integrally formed body. In addition, costs of the vehicle light module can be reduced due to low production costs of the integrally formed body.

A third aspect of this application provides a transportation means, including the optical engine according to any implementation of the first aspect.

For the transportation means provided in this embodiment of this application, the optical engine has the integrally formed body, thereby lowering production costs of the transportation means.

### BRIEF DESCRIPTION OF DRAWINGS

FIG. 1 is a diagram of a structure of a vehicle light module according to an embodiment of this application;
FIG. 2 is a diagram of a three-dimensional structure of an optical engine according to an embodiment of this application;
FIG. 3 is an exploded view of the optical engine in FIG. 2;
FIG. 4 is a sectional view of the optical engine in FIG. 2;
FIG. 5 is a partially enlarged diagram of a position A in FIG. 4;
FIG. 6 is a diagram of a three-dimensional structure in which a body in FIG. 2 is separated from a collimating lens;
FIG. 7 is a partially enlarged diagram of a position at a dashed line in FIG. 6;
FIG. 8 is a diagram of a three-dimensional structure of a reflective unit in FIG. 2;
FIG. 9 is a bottom view of the optical engine in FIG. 2;
FIG. 10 is a diagram of a first three-dimensional structure of a body in FIG. 2;
FIG. 11 is a partially enlarged diagram of a position B in FIG. 4;
FIG. 12 is a diagram of a second three-dimensional structure of a body in FIG. 2;
FIG. 13 is a sectional view of a heat dissipation apparatus in FIG. 2, with a fan and an air duct removed;
FIG. 14 is a top view of the optical engine in FIG. 2; and
FIG. 15 is a diagram of a three-dimensional structure of a heat dissipation apparatus in FIG. 2, with a fan and an air duct removed.

Reference numerals:
100: optical engine;
200: vehicle light module;
300: housing;
10: light source unit; 11: light source; 12: collimating lens;
20: reflective unit; 21: reflective element; 211: first hole; 22: bracket; 221: first positioning part; 222: second hole; 223: supporting part; 224: main body part;
30: imaging unit; 31: imaging element; 32: circuit board;
40: lens;
50: body; 51: first opening; 511: annular step surface; 52: second opening; 53: third opening; 54: fourth opening; 55: first protrusion part; 56: second positioning part; 57: third positioning part; 58: fourth positioning part; 59: positioning hole;
60: elastic component; 61: third hole;
70: heat dissipation apparatus; 71: first heat dissipation member; 711: positioning structure; 712: first heat exchange member; 713: second heat exchange member;
72: second heat dissipation member; 721: fifth positioning part; 722: second protrusion part; 723: third heat exchange member; and 724: heat sink;
73: heat pipe fitting; 74: fan; 75: air duct;
81: via hole; 82: accommodating slot; 83: avoidance notch.

### DESCRIPTION OF EMBODIMENTS

At present, an optical engine includes a lens, an optical component, a light source, a projection chip, and a body. The body includes a plurality of mechanical parts. The optical component includes a reflector and a plurality of collimating lenses. The reflector is connected to the body by using a first bracket, the collimating lens is connected to the body by using a second bracket, the collimating lens is configured to collimate a light beam emitted by the light source, and the reflector is configured to reflect, to the projection chip, the light beam collimated by the collimating lens. The projection chip is a digital micromirror device (digital micromirror device, DMD for short). The projection chip may modulate image content onto the received light beam, and output imaging light with the modulated image content to the lens.

However, the body includes the plurality of mechanical parts and components such as the reflector, the projection chip, and the collimating lens are connected to the body by using brackets, resulting in an excessive quantity of parts in the optical engine and an excessive quantity of assembly times of the optical engine. This further reduces production efficiency of the optical engine. In addition, the body includes the plurality of mechanical parts, resulting in an increase in production costs of the body and a consequent increase in those of the optical engine. In addition, mounting components such as the collimating lens and the reflector on the body by using the brackets also increases costs of the optical engine. Finally, the body includes the plurality of mechanical parts, resulting in an excessively long tolerance chain after assembly of the optical engine. This leads to a great assembly error of the optical engine, consequently reducing performance of the optical engine.

In view of this, embodiments of this application provide an optical engine 100, a vehicle light module 200, and a transportation means. An integrally formed body 50 cooperates with components such as a light source 11 and a collimating lens 12, so that a quantity of parts in the optical engine 100 is reduced. In this way, a quantity of assembly times of the optical engine 100 can be reduced, and production efficiency of the optical engine 100 can be further improved. In addition, a length of a tolerance chain after assembly of the optical engine 100 can be shortened. This can reduce an assembly error of the optical engine 100, to improve performance of the optical engine 100. Further, this can reduce costs of parts in the optical engine 100, thereby lowering production costs of the optical engine 100.

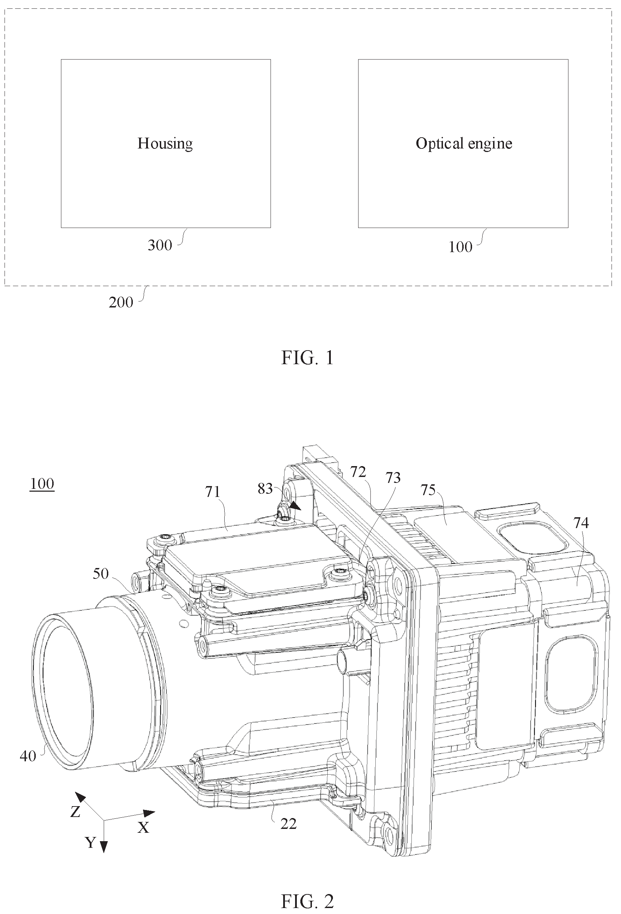

FIG. 1 is a diagram of a structure of the vehicle light module according to this embodiment of this application. The transportation means provided in this embodiment of this application includes a transportation means body and the vehicle light module 200. With reference to FIG. 1, the vehicle light module 200 includes a housing 300 and the optical engine 100. At least a part of the optical engine 100 is disposed inside the housing 300. For example, a part of the optical engine 100 may be disposed inside the housing 300, and the other part of the optical engine 100 may be disposed outside the housing 300. Certainly, the optical engine 100 may alternatively be disposed inside the housing 300. The vehicle light module 200 may serve as a vehicle light to emit illumination light, to ensure a driving requirement. Alternatively, interaction information such as a picture and a symbol may be projected on the ground, to improve driving safety or implement rich intelligent vehicle light interaction scenarios.

The transportation means in this embodiment of this application may include but is not limited to a vehicle, a ship, an aircraft, a rail train, a handcart, or the like. The vehicle may include but is not limited to a monocycle, a bicycle, a tricycle, a four-wheeled vehicle, or the like. In addition, the vehicle may include but is not limited to a fuel vehicle, a tram, a hybrid vehicle, or the like.

It should be noted that the optical engine 100 provided in this embodiment of this application may be used in an electronic device like a head-up display, a projector, or an in-vehicle display in addition to the vehicle light module 200.

The following describes an implementation of the optical engine 100 provided in this embodiment of this application.

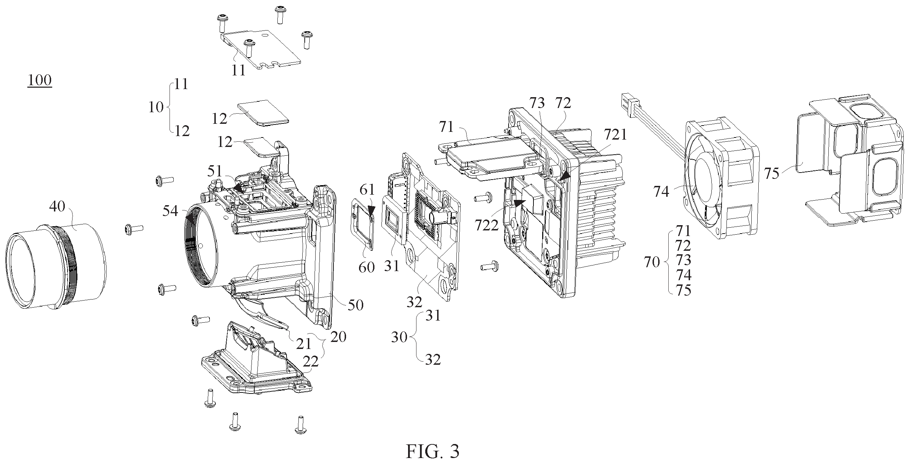

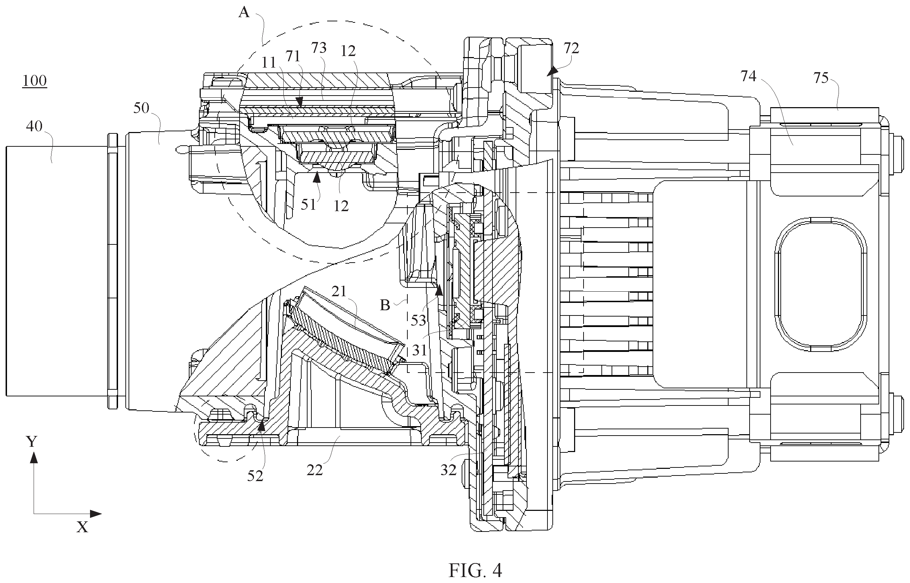

FIG. 2 is a diagram of a three-dimensional structure of the optical engine according to this embodiment of this application. FIG. 3 is an exploded view of the optical engine in FIG. 2. FIG. 4 is a sectional view of the optical engine in FIG. 2.

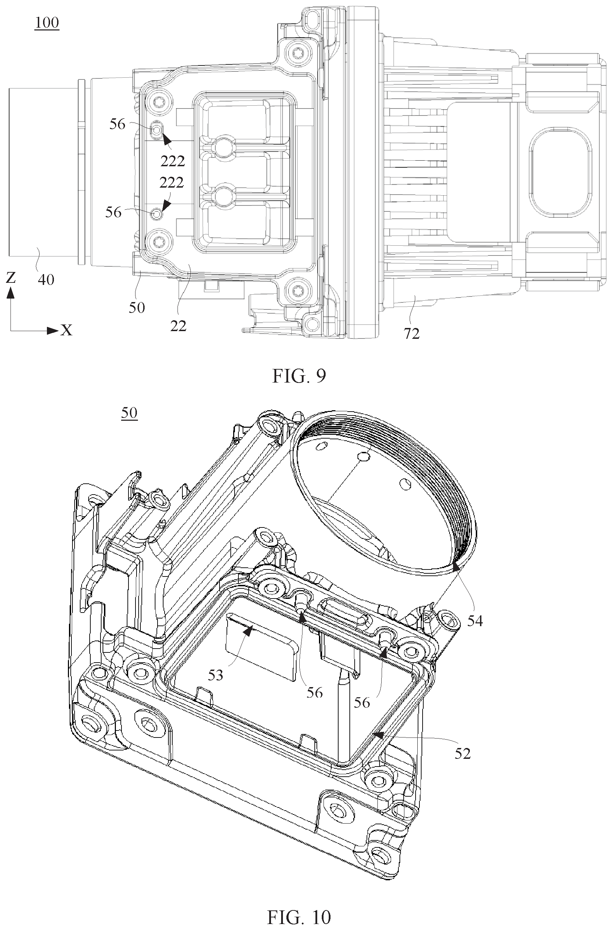

With reference to FIG. 3, it can be learned that the optical engine 100 in this embodiment of this application includes a light source unit 10, an imaging unit 30, a reflective unit 20, a lens 40, and the integrally formed body 50. The body 50 is provided with a first opening 51 (as shown in FIG. 3 or FIG. 4), a second opening 52 (as shown in FIG. 4 or FIG. 10), a third opening 53 (as shown in FIG. 4), and a fourth opening 54 (as shown in FIG. 3). Any one of the first opening 51, the second opening 52, the third opening 53, and the fourth opening 54 communicates with an interior and an exterior of the body 50. The first opening 51 is opposite to the second opening 52 in a second direction (for example, a Y direction in FIG. 2). The third opening 53 is opposite to the fourth opening 54 in a first direction (for example, an X direction in FIG. 2). The first direction, the second direction, and a third direction (for example, a Z direction in FIG. 2) are perpendicular to each other, and a direction of an optical axis of the lens 40 is defined as the first direction. The light source unit 10 is disposed at the first opening 51 and is connected to the body 50 (for example, as shown in FIG. 4). The reflective unit 20 is disposed at the second opening 52 and is connected to the body 50 (for example, as shown in FIG. 4). The imaging unit 30 is disposed at the third opening 53 and is connected to the body 50 (for example, as shown in FIG. 4). The lens 40 is disposed at the fourth opening 54 and is connected to the body 50 (for example, as shown in FIG. 2 or FIG. 4). The light source unit 10 is configured to emit light directed toward the reflective unit 20, the reflective unit 20 is configured to reflect, to the imaging unit 30, the light emitted by the light source unit 10, and the imaging unit 30 is configured to output, based on the light reflected by the reflective unit 20, imaging light directed toward the lens 40.

In this embodiment of this application, the integrally formed body 50 supports the light source unit 10, the imaging unit 30, the reflective unit 20, and the lens 40, so that a quantity of parts in the optical engine 100 can be reduced, an assembly process of the optical engine 100 can be simplified, and production efficiency of the optical engine 100 can be further improved. In addition, because the light source unit 10, the imaging unit 30, the reflective unit 20, and the body 50 are all connected to the body 50, a length of a tolerance chain after assembly of the optical engine 100 can be shortened, so that an assembly error of the optical engine 100 can be reduced, and performance of the optical engine 100 can be further improved. Besides, because the body 50 is integrally formed, production costs of the body 50 can be further reduced, thereby lowering production costs of the optical engine 100. Moreover, components such as the light source unit 10, the imaging unit 30, the reflective unit 20, and the lens 40 are connected to the body 50, so that a bracket 22 connecting one of the light source unit 10, the imaging unit 30, the reflective unit 20, and the lens 40 to the body 50 can be removed. This can reduce costs of parts in the optical engine 100, so that the production costs of the optical engine 100 can be reduced.

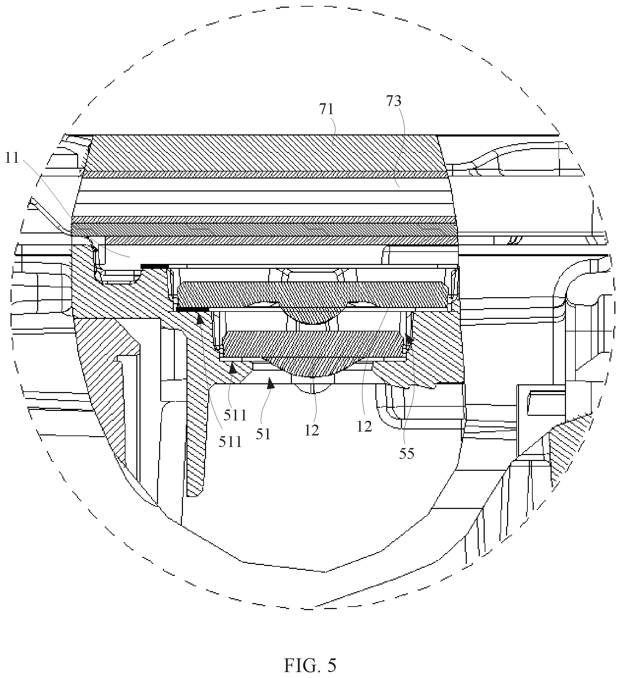

With reference to FIG. 2, it can be learned that the light source unit 10 may include the light source 11 and at least one collimating lens 12. For example, there may be two collimating lenses 12. Certainly, there may alternatively be less than or more than two collimating lenses 12. The light source 11 is connected to the body 50, and the light source 11 is configured to emit light directed toward the collimating lens 12. When there are a plurality of collimating lenses 12, the plurality of collimating lenses 12 are spaced apart in the second direction (the Y direction in FIG. 4). For example, as shown in FIG. 5, two collimating lenses 12 are spaced apart, and one of the two collimating lenses 12 is disposed between the light source 11 and the other collimating lens 12 and is spaced apart from the light source 11. At least a part of each collimating lens 12 is disposed inside the first opening 51. For example, as shown in FIG. 5, each collimating lens 12 is disposed inside the first opening 51. Certainly, a part of the plurality of collimating lenses 12 may alternatively be disposed inside the first opening 51, and the other part of the plurality of collimating lenses 12 may be partially disposed inside the first opening 51. Each collimating lens 12 is disposed on an optical path between the light source 11 and the reflective unit 20 and is connected to the body 50, so that each collimating lens 12 can collimate the light emitted by the light source 11. FIG. 5 is a partially enlarged diagram of a position A in FIG. 4.

A specific structure of the light source 11 is not limited herein. For example, the light source 11 may be a surface light-emitting semiconductor light source, for example, a light-emitting diode (light-emitting diode, LED) panel.

With reference to FIG. 5, it can be learned that the light source 11 may be disposed outside the first opening 51 and shield the first opening 51. Certainly, the light source 11 may alternatively be partially disposed outside the first opening 51 and shield the first opening 51. The light source 11 can seal the first opening 51 by shielding the first opening 51, so that a quantity of parts in the optical engine 100 can be reduced. In addition, the light source 11 may be in contact with or not in contact with the body 50. This is not specifically limited herein.

With reference to FIG. 5, at least the part of each collimating lens 12 is disposed inside the first opening 51, so that an integration level of the optical engine 100 can be improved on a premise of collimating the light emitted by the light source 11. This facilitates miniaturization of the optical engine 100.

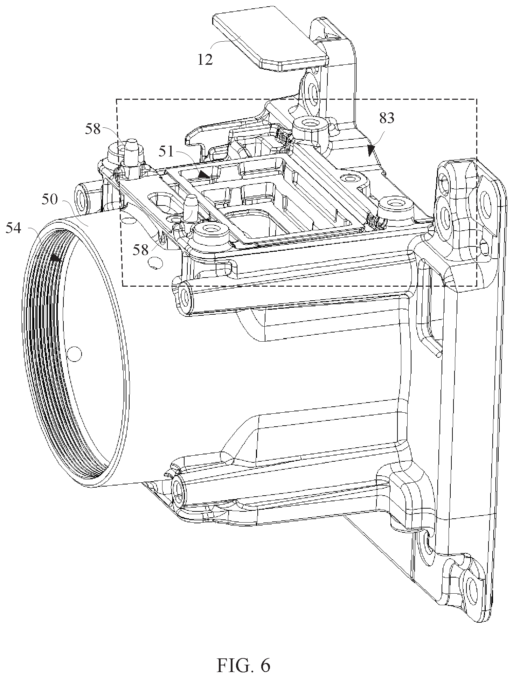

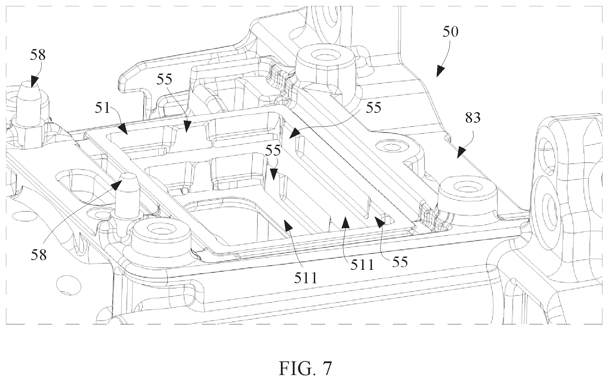

FIG. 6 is a diagram of a three-dimensional structure in which the body in FIG. 2 is separated from a collimating lens. FIG. 7 is a partially enlarged diagram of a position at a dashed line in FIG. 6.

In some possible implementations, at least one annular step surface 511 may be provided on an inner wall of the first opening 51. For example, as shown in FIG. 7, two annular step surfaces 511 are provided on the inner wall of the first opening 51, and the two annular step surfaces 511 are spaced apart. With reference to FIG. 5, it can be learned that each annular step surface 511 corresponds to one collimating lens 12 and is used to support the corresponding collimating lens 12.

During assembly of the optical engine 100, the annular step surface 511 may cooperate with the collimating lens 12 to determine a relative position between the collimating lens 12 and the body 50, so that a difficulty in assembling the collimating lens 12 and the body 50 can be reduced, and production efficiency of the optical engine 100 can be further improved. In addition, the annular step surface 511 may alternatively be bonded to a bottom surface of the collimating lens 12, so that the body 50 is connected to the collimating lens 12.

How the annular step surface 511 cooperates with the collimating lens 12 is not limited herein. For example, as shown in FIG. 5, a gap for accommodating a glue exists between the annular step surface 511 and the collimating lens 12, so that the annular step surface 511 is bonded to the bottom surface of the collimating lens 12. Alternatively, the annular step surface 511 may be in contact with the bottom surface of the collimating lens 12.

In some embodiments, with reference to FIG. 7, a plurality of first protrusion parts 55 may be further disposed on the body 50, and the plurality of first protrusion parts 55 are disposed inside the first opening 51. Each collimating lens 12 corresponds to the plurality of first protrusion parts 55, and each first protrusion part 55 is in contact with a side wall of the corresponding collimating lens 12 (for example, as shown in FIG. 5). During assembly of the optical engine 100, the first protrusion part 55 cooperates with the collimating lens 12, so that the relative position between the collimating lens 12 and the body 50 can be determined, and an assembly speed of the optical engine 100 can be further improved.

The plurality of collimating lenses 12 correspond to an equal quantity of first protrusion parts 55. For example, each collimating lens 12 may correspond to six first protrusion parts 55. Certainly, a quantity of first protrusion parts 55 corresponding to each collimating lens 12 may alternatively be greater than or less than six. In addition, the plurality of collimating lenses 12 may alternatively correspond to different quantities of first protrusion parts 55; or a part of the plurality of collimating lenses 12 may alternatively correspond to an equal quantity of first protrusion parts 55, and the other part of the plurality of collimating lenses 12 may alternatively correspond to different quantities of first protrusion parts 55.

With reference to FIG. 2, it can be learned that the reflective unit 20 may include the bracket 22 and a reflective element 21. The reflective element 21 is disposed inside the body 50 and is connected to the body 50 by using the bracket 22 (for example, as shown in FIG. 4). The reflective element 21 is configured to reflect, to the imaging unit 30, the light emitted by the light source unit 10. A part of the bracket 22 is disposed outside the body 50 via the third opening 53, and the other part of the bracket 22 is disposed inside the body 50 and is fastened to the reflective element 21 (for example, as shown in FIG. 4).

During assembly of the optical engine 100, the reflective element 21 may be mounted on the body 50 by using the bracket 22, so that the reflective element 21 is disposed inside the body 50, to reflect, to the imaging unit 30, the light emitted by the light source unit 10. In addition, the bracket 22 and the reflective element 21 may alternatively be assembled into one component in advance and then connected to the body 50, so that a difficulty in connecting the reflective element 21 to the body 50 can be reduced, and assembly efficiency of the optical engine 100 can be further improved.

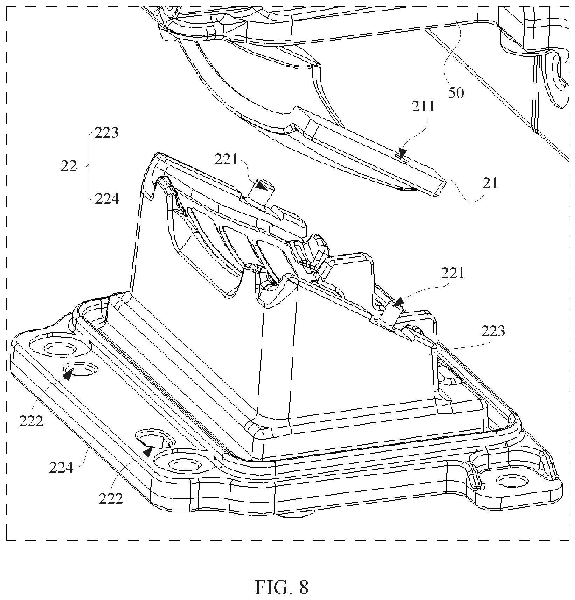

A specific structure of the reflective element 21 is not limited herein. For example, as shown in FIG. 8, the reflective element 21 may be a curved reflector. Alternatively, in some embodiments, the reflective element 21 may be a prism. FIG. 8 is a diagram of a three-dimensional structure of the reflective unit in FIG. 2.

How to connect the reflective element 21 to the bracket 22 is not limited herein. For example, as shown in FIG. 4, a gap for accommodating a glue exists between the reflective element 21 and the bracket 22, so that the reflective element 21 is bonded to the bracket 22.

In some possible implementations, one of the reflective element 21 and the bracket 22 may include a first hole 211, and the other one of the reflective element 21 and the bracket 22 may include a first positioning part 221 at least partially disposed inside the first hole 211. For example, as shown in FIG. 8, the reflective element 21 may be provided with the first hole 211, and the bracket 22 may be disposed with the first positioning part 221. Certainly, the first hole 211 may alternatively be provided in the bracket 22, and the first positioning part 221 may be disposed in the reflective element 21.

FIG. 9 is a bottom view of the optical engine in FIG. 2. During assembly of the reflective unit 20, the first positioning part 221 is inserted into the first hole 211 (for example, as shown in FIG. 9), so that a relative position between the reflective element 21 and the bracket 22 can be determined. In this way, after the bracket 22 is connected to the body 50, a relative position relationship between the reflective element 21 and the body 50 can be ensured, and position precision of the reflective element 21, the light source unit 10, and the imaging unit 30 can be further ensured. In addition, providing the first hole 211 in the reflective element 21 can reduce a difficulty in manufacturing the reflective element 21.

A specific shape of the first hole 211 is not limited herein. For example, the first hole 211 may be a circular hole. Alternatively, the first hole 211 may be a square hole.

To determine a relative position between the reflective element 21 and the bracket 22, a structure of the first positioning part 221 needs to match a structure of the first hole 211. For example, when the first hole 211 is a circular hole, the first positioning part 221 may be cylindrical (for example, as shown in FIG. 8). Certainly, when the first hole 211 is another structure, the first positioning part 221 may also be another structure. For example, the first positioning part 221 may alternatively be a prism shape.

In this embodiment of this application, there are two first holes 211, and the two first holes 211 are distributed at two opposite ends of the reflective element 21. Certainly, there may alternatively be more than two first holes 211. In this case, at least one first hole 211 is provided at each of the two opposite ends of the reflective element 21. When there are a plurality of first holes 211, each first hole 211 corresponds to one first positioning part 221. For example, as shown in FIG. 8, two first holes 211 correspond to two first positioning parts 221 in a one-to-one manner.

FIG. 10 is a diagram of a first three-dimensional structure of the body in FIG. 2. In some possible implementations, one of the bracket 22 and the body 50 includes a second hole 222, and the other one of the bracket 22 and the body 50 includes a second positioning part 56 at least partially disposed inside the second hole 222. For example, the second hole 222 may be provided in the bracket 22 (as shown in FIG. 8), and the second positioning part 56 may be disposed in the body 50 (as shown in FIG. 10); or the second hole 222 may alternatively be provided in the body 50, and the second positioning part 56 may alternatively be disposed in the bracket 22.

During assembly of the optical engine 100, the second positioning part 56 is inserted into the second hole 222, so that a relative position between the bracket 22 and the body 50 can be determined. In this way, a relative position between the reflective element 21 and the body 50 can be ensured, and a relative position between the reflective element 21, and the light source unit 10 and the imaging unit 30 can be further ensured.

With reference to FIG. 8, there are two second holes 222, the two second holes 222 are disposed at two opposite ends of the bracket 22, and each second hole 222 corresponds to one second positioning part 56. Certainly, there may alternatively be more than two second holes 222. In this case, at least one second hole 222 is provided at each end of the two opposite ends of the bracket 22, and each second hole 222 corresponds to one second positioning part 56.

A specific structure of the second hole 222 is not limited herein. For example, the second hole 222 may be a circular hole. Certainly, the second hole 222 may alternatively be another structure. In addition, when there are a plurality of second holes 222, structures of the plurality of second holes 222 may be the same or partially the same, or may be different.

In this embodiment of this application, a specific structure of the second positioning part 56 is not limited herein. For example, as shown in FIG. 10, the second positioning part 56 may be cylindrical.

In some possible implementations, with reference to FIG. 8, it can be learned that the bracket 22 may include a supporting part 223 and a main body part 224. A part of the supporting part 223 is disposed inside the body 50 and is fastened to the reflective element 21 (for example, as shown in FIG. 4). The main body part 224 is disposed outside the body 50 and shields the second opening 52 (for example, as shown in FIG. 4), and the main body part 224 is fastened to the body 50.

Correspondingly, when the bracket 22 that includes the main body part 224 and the supporting part 223 is used to connect the reflective element 21 to the body 50, the second opening 52 may be further sealed to ensure sealing performance of the optical engine 100. In addition, a quantity of parts in the optical engine 100 may be further reduced, to improve production efficiency of the optical engine 100.

With reference to FIG. 8, it can be learned that, because the body 50 is connected to the main body part 224, the second hole 222 is provided on the main body part 224. In addition, the reflective element 21 is connected to the supporting part 223, so that the first positioning part 221 is disposed on the supporting part 223.

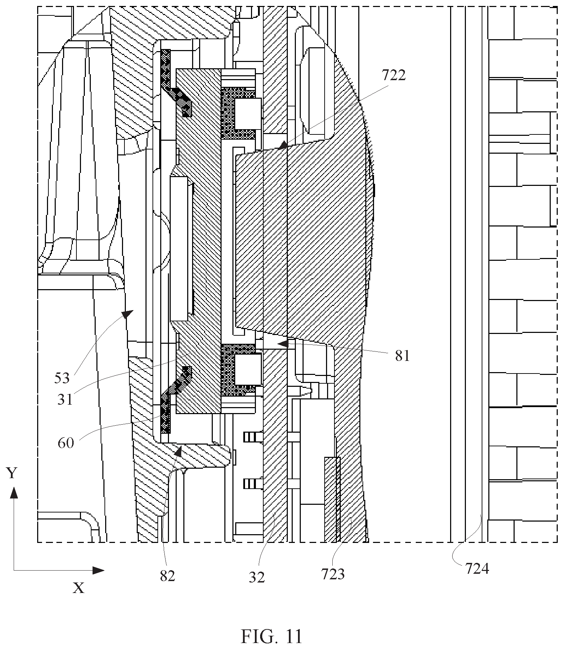

FIG. 11 is a partially enlarged diagram of a position B in FIG. 4. With reference to FIG. 2, it can be learned that the imaging unit 30 may include a circuit board 32 and an imaging element 31. With reference to FIG. 11, the circuit board 32 is disposed outside the body 50 and is connected to the body 50, the imaging element 31 is connected to the circuit board 32 and is disposed at the third opening 53, and the imaging element 31 is configured to output, based on the light reflected by the reflective unit 20, the imaging light directed toward the lens 40. Correspondingly, the circuit board 32 is disposed outside the body 50, so that a difficulty in connecting the circuit board 32 to the body 50 can be reduced, and a heat dissipation requirement of the imaging unit 30 can be further met.

The imaging element 31 may include but is not limited to a digital micromirror device (digital micromirror device, DMD for short) or a micro-electro-mechanical system (micro-electro-mechanical system, MEMS for short). For example, in this embodiment of this application, an example in which the DMD is the imaging element 31 is used for description.

In some possible implementations, with reference to FIG. 11, a projection of the imaging element 31 may cover the third opening 53 in the first direction (for example, the X direction in FIG. 11), and the imaging element 31 may seal the third opening 53 by shielding the third opening 53, so that a quantity of parts in the optical engine 100 can be reduced. This helps further improve production efficiency of the optical engine 100.

That the projection of the imaging element 31 covers the third opening 53 in the first direction may be understood as that the imaging element 31 covers the third opening 53 in the first direction.

In some embodiments, with reference to FIG. 11, it can be learned that the body 50 may further be provided with an accommodating slot 82 for accommodating at least a part of the imaging element 31. For example, the imaging element 31 may be disposed inside the accommodating slot 82. Certainly, a part of the imaging element 31 may alternatively be disposed inside the accommodating slot 82. The accommodating slot 82 communicates with the interior of the body 50 via the third opening 53, so that the interior of the body 50 communicates with the exterior of the body 50 via the third opening 53 and the accommodating slot 82. During assembly of the optical engine 100, a relative position between the imaging unit 30 and the body 50 may be roughly determined by using the accommodating slot 82. In addition, the accommodating slot 82 may cooperate with the imaging element 31, to improve sealing performance between the imaging unit 30 and the body 50.

In some possible implementations, with reference to FIG. 11, it can be learned that the optical engine 100 may further include an elastic component 60 of an annular structure, and the elastic component 60 is disposed between the body 50 and the imaging element 31 and is abutted with the imaging element 31 and the body 50.

With reference to FIG. 11, the elastic component 60 is disposed between the body 50 and the imaging element 31, so that sealing performance between the imaging element 31 and the body 50 can be improved. In addition, due to a soft material of the elastic component 60, the imaging element 31 is in soft contact with the elastic component 60, so that hard contact between the imaging element 31 and the body 50 can be avoided, and the imaging element 31 can be further prevented from being damaged during assembly of the optical engine 100.

An outer diameter of the elastic component 60 is greater than a size of the third opening 53. In addition, an inner diameter of the elastic component 60 may be greater than or equal to the size of the third opening 53, to prevent the elastic component 60 from affecting the imaging element 31 to receive light and output imaging light.

A specific material of the elastic component 60 is not limited herein, for example, may be rubber.

In some embodiments, the elastic component 60 may be fastened to the imaging element 31, so that the imaging unit 30 and the elastic component 60 may be assembled into one component in advance. In this way, a quantity of assembly times of the optical engine 100 can be reduced, and production efficiency of the optical engine 100 can be further improved.

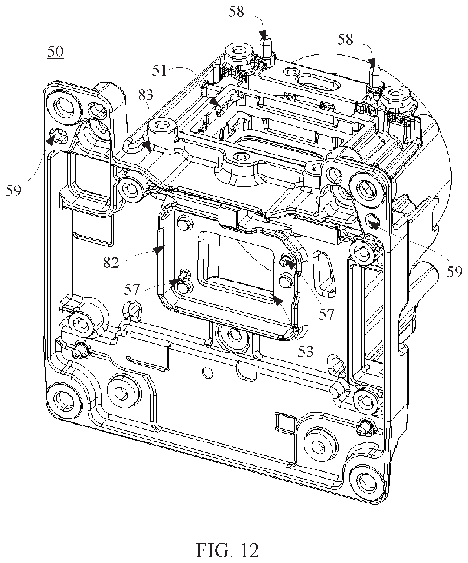

FIG. 12 is a diagram of a second three-dimensional structure of the body in FIG. 2. In some embodiments, one of the body 50 and the elastic component 60 may include a third hole 61, and the other one of the body 50 and the elastic component 60 may include a third positioning part 57 at least partially disposed inside the third hole 61. For example, the third hole 61 may be provided on the elastic component 60 (as shown in FIG. 2), and the third positioning part 57 may be disposed on the body 50 (as shown in FIG. 12). Certainly, the third hole 61 may alternatively be provided on the body 50, and the third positioning part 57 alternatively may be disposed on the elastic component 60.

During assembly of the optical engine 100, the third positioning part 57 is inserted into the third hole 61, so that a relative position between the elastic component 60 and the body 50 can be quickly determined. In this way, after the elastic component 60 is connected to the imaging element 31 in advance, a relative position between the imaging unit 30 and the body 50 can be quickly determined, to improving production efficiency of the optical engine 100 while ensuring position precision of the imaging unit 30 and the body 50.

With reference to FIG. 12, it can be learned that there are two third positioning parts 57. Certainly, there may alternatively be less than or more than two third positioning parts. In addition, when there are a plurality of third positioning parts 57, structures of the plurality of third positioning parts 57 may be the same or partially the same, or may be different.

With reference to FIG. 2 and FIG. 4, it can be learned that a part of the lens 40 is disposed inside the fourth opening 54 and may be in threaded connection to the body 50. The lens 40 is in threaded connection to the body 50, so that a difficulty in connecting the lens 40 to the body 50 is reduced on the premise of connecting the lens 40 to the body 50. In addition, a focal length of the lens 40 may be adjusted by rotating the lens 40, so that a difficulty in adjusting the focal length can be reduced. Besides, at least a part of the lens 40 is disposed inside the fourth opening 54, so that a size of the optical engine 100 in the first direction can be reduced. This facilitates miniaturization of the optical engine 100.

A specific structure of the lens 40 is not limited herein. For example, the lens 40 may include a frame body of a hollow structure and a plurality of lens elements. The plurality of lens elements are disposed inside the frame body and arranged side by side in the first direction. A part of the frame body is disposed inside the fourth opening 54 and is in threaded connection to the body 50.

It should be noted that, in addition to the threaded connection manner, the lens 40 may be connected to the body 50 through clamping or the like.

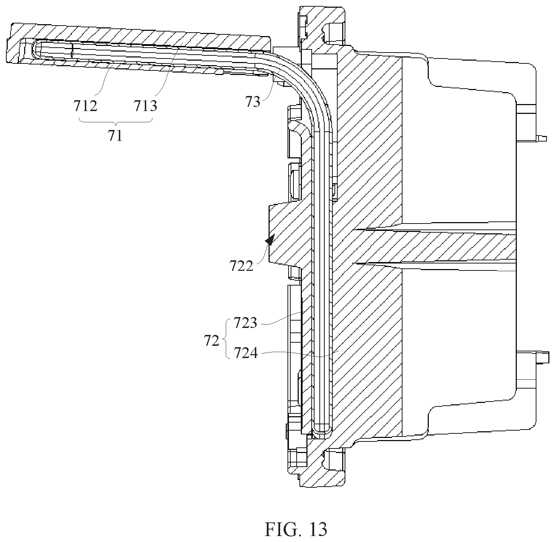

FIG. 13 is a sectional view of the heat dissipation apparatus in FIG. 2, with a fan and an air duct removed. In some possible implementations, with reference to FIG. 1 and FIG. 2, it can be learned that the optical engine 100 may further include a heat dissipation apparatus 70, and the heat dissipation apparatus 70 includes a first heat dissipation member 71, a second heat dissipation member 72, and a heat pipe fitting 73. With reference to FIG. 13, one end of the heat pipe fitting 73 is disposed inside the first heat dissipation member 71 and is connected to the first heat dissipation member 71, and the other end of the heat pipe fitting 73 is disposed inside the second heat dissipation member 72 and is connected to the second heat dissipation member 72. With reference to FIG. 4, the first heat dissipation member 71 covers the light source 11 of the light source unit 10 and is connected to the body 50, and the second heat dissipation member 72 covers the imaging unit 30 and is connected to the body 50.

The heat dissipation apparatus 70 that includes the first heat dissipation member 71, the second heat dissipation member 72, and the heat pipe fitting 73 may perform heat dissipation on the imaging unit 30 and the light source 11, so that a temperature of the imaging unit 30 and a temperature of the light source 11 are within a proper range. In addition, the heat pipe fitting 73 may transfer, to the second heat dissipation member 72, heat that is transferred from the light source 11 to the first heat dissipation member 71, so that a structure of the first heat dissipation member 71 can be simplified while heat dissipation of the light source 11 is ensured. This can avoid an excessively complex structure of the first heat dissipation member 71, or avoid an excessively large size of the optical engine 100 in a second direction caused by an excessively large size of the first heat dissipation member 71 in the second direction. In addition, because the second heat dissipation member 72 is disposed at one end of the body 50, the second heat dissipation member 72 is properly designed, so that an excessively large size of the second heat dissipation member 72 in the second direction can be avoided while heat dissipation requirements of the light source 11 and the imaging unit 30 are met. This can reduce a volume of the optical engine 100.

A gap may be provided between the first heat dissipation member 71 and the light source 11 (for example, as shown in FIG. 5). The gap may be used to accommodate a thermally conductive medium. Certainly, a thermally conductive medium may alternatively not be disposed between the first heat dissipation member 71 and the light source 11, or the first heat dissipation member 71 may be in contact with the light source 11.

A specific structure of the first heat dissipation member 71 is not limited herein. For example, with reference to FIG. 13, it can be learned that the first heat dissipation member 71 may include a first heat exchange member 712 and a second heat exchange member 713, one end of the heat pipe fitting 73 is disposed between the first heat exchange member 712 and the second heat exchange member 713, and the first heat exchange member 712 is disposed between the heat pipe fitting 73 and the light source 11. In a heat dissipation process, heat generated by the light source 11 is transferred to the second heat exchange member 713 and the heat pipe fitting 73 via the first heat exchange member 712, the second heat exchange member 713 exchanges heat with air nearby the second heat exchange member 713, and the heat pipe fitting 73 transfers the heat generated by the light source 11 to the second heat dissipation member 72.

The first heat exchange member 712 may include but is not limited to a copper plate, an aluminum alloy plate, or the like. A specific structure of the second heat dissipation member 72 is not limited herein. For example, the second heat dissipation member 72 may be a plate structure.

A specific structure of the second heat dissipation member 72 is not limited herein. For example, with reference to FIG. 13, it can be learned that the second heat dissipation member 72 may include a third heat exchange member 723 and a heat sink 724, the other end of the heat pipe fitting 73 is disposed between the third heat exchange member 723 and the heat sink 724, and the third heat exchange member 723 is disposed close to the imaging unit 30. The heat sink 724 includes a plurality of heat sink fins, which can increase a heat exchange area between the heat sink 724 and air, thereby improving a heat dissipation capability of the second heat dissipation member 72. In a heat dissipation process, heat generated by the imaging unit 30 may be transferred to the heat pipe fitting 73 and the heat sink 724, and the heat pipe fitting 73 may transfer the heat generated by the imaging unit 30 to the heat sink 724.

In some possible implementations, with reference to FIG. 2, it can be learned that a projection of the body 50 may cover a projection of the first heat dissipation member 71 in the second direction, and the first heat dissipation member 71 is disposed between two opposite ends of the body 50.

Correspondingly, an excessively large size of the optical engine 100 caused by a size of the first heat dissipation member 71 may be avoided while a heat dissipation requirement of the light source 11 is met. This helps implement miniaturization of the optical engine 100.

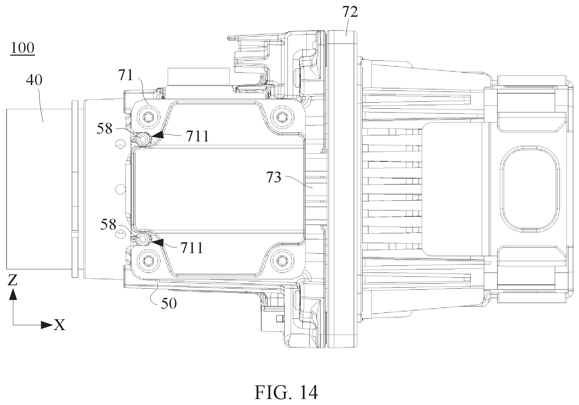

FIG. 14 is a top view of the optical engine in FIG. 2. In some possible implementations, one of the body 50 and the first heat dissipation member 71 may include a positioning structure 711, and the other one of the body 50 and the first heat dissipation member 71 may include a fourth positioning part 58. The positioning structure 711 is configured to cooperate with the fourth positioning part 58 to determine a relative position between the body 50 and the first heat dissipation member 71. For example, as shown in FIG. 14, the positioning structure 711 may be disposed on the first heat dissipation member 71, and the fourth positioning part 58 may be disposed on the body 50. Certainly, the positioning structure 711 may alternatively be disposed on the body 50, and the fourth positioning part 58 may alternatively be disposed on the first heat dissipation member 71.

Correspondingly, during assembly of the optical engine 100, a relative position between the body 50 and the first heat dissipation member 71 can be determined through cooperation between the positioning structure 711 and the fourth positioning part 58, so that a relative position between the heat dissipation apparatus 70 and the body 50 can be determined, and assembly efficiency of the heat dissipation apparatus 70 and the body 50 can be further improved.

With reference to FIG. 14, it can be learned that there may be two positioning structures 711, the two positioning structures 711 are respectively disposed at two opposite ends of the first heat dissipation member 71, and each positioning structure 711 corresponds to one fourth positioning part 58. Certainly, there may alternatively be more than two positioning structures 711. In this case, at least one positioning structure 711 is disposed at each of the two opposite ends of the first heat dissipation member 71.

A specific structure of the positioning structure 711 is not limited herein. For example, as shown in FIG. 14, the positioning structure 711 may be a positioning notch provided on the first heat dissipation member 71, and the body 50 may include a fourth positioning part 58 inserted into the positioning notch. During assembly of the optical engine 100, the heat dissipation apparatus 70 may move toward the body 50 in an axial direction of the lens 40 until the fourth positioning part 58 is inserted into the positioning notch, so that a relative position between the body 50 and the heat dissipation apparatus 70 can be quickly implemented, and an assembly speed of the heat dissipation apparatus 70 and the body 50 can be further improved.

In addition to a positioning notch, the positioning structure 711 may be a structure such as a groove or an opening.

A specific structure of the fourth positioning part 58 is not limited herein. For example, the fourth positioning part 58 may be cylindrical (for example, as shown in FIG. 12).

It should be noted that, when there are a plurality of positioning structures 711, both the positioning structure 711 and the fourth positioning part 58 may be disposed on the body 50.

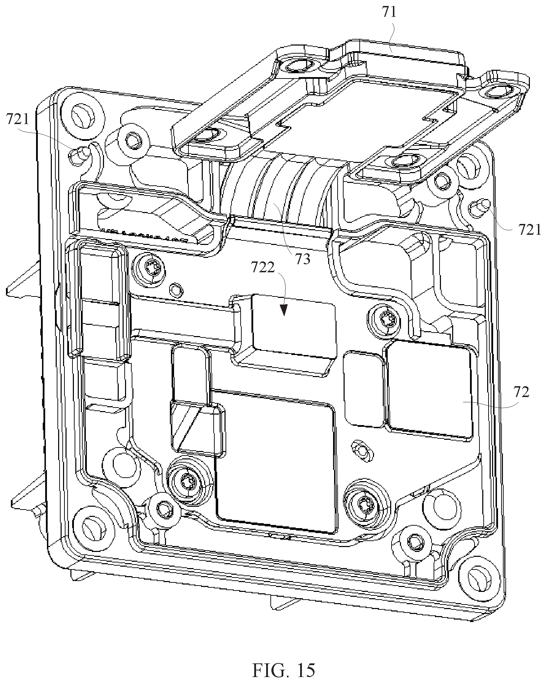

FIG. 15 is a diagram of a three-dimensional structure of the heat dissipation apparatus in FIG. 2, with a fan and an air duct removed. In some possible implementations, one of the second heat dissipation member 72 and the body 50 may be provided with a positioning hole 59, and the other one of the second heat dissipation member 72 and the body 50 may be disposed with a fifth positioning part 721 configured to be inserted into the positioning hole 59. For example, the body 50 may be provided with the positioning hole 59 (for example, as shown in FIG. 12), and the second heat dissipation member 72 may be disposed with the fifth positioning part 721 (for example, as shown in FIG. 15). Certainly, the positioning hole may alternatively be provided on the second heat dissipation member 72, and the fifth positioning part 721 may alternatively be disposed on the body 50.

Correspondingly, during assembly of the optical engine 100, a relative position between the body 50 and the second heat dissipation member 72 can be determined through cooperation between the positioning hole 59 and the fifth positioning part 721, so that the relative position between the heat dissipation apparatus 70 and the body 50 can be determined, and assembly efficiency of the heat dissipation apparatus 70 and the body 50 can be further improved.

A specific structure of the fifth positioning part 721 is not limited herein. For example, with reference to FIG. 15, it can be learned that the fifth positioning part 721 may be cylindrical.

With reference to FIG. 15, it can be learned that there may be two fifth positioning parts 721, the two fifth positioning parts 721 are respectively disposed at two opposite ends of the second heat dissipation member 72, and each fifth positioning part 721 corresponds to one positioning hole 59. Certainly, there may alternatively be more than two fifth positioning parts 721.

It should be noted that, when there are a plurality of fifth positioning parts 721 and a plurality of positioning holes 59, both a fifth positioning part 721 and a positioning hole 59 may be disposed on the body 50, and correspondingly, both a fifth positioning part 721 and a positioning hole 59 may also be disposed on the second heat dissipation member 72.

In some possible implementations, with reference to FIG. 11, it can be learned that the second heat dissipation member 72 may include a second protrusion part 722, the circuit board 32 includes a via hole 81 for the second protrusion part 722 to pass through, and the imaging element 31 is disposed between the lens 40 and the second protrusion part 722. A gap may exist between the imaging element 31 and the second protrusion part 722, and the gap may be used to accommodate a thermally conductive medium. Certainly, the imaging element 31 may alternatively be in contact with the second protrusion part 722.

Correspondingly, with reference to the figure, the second protrusion part 722 close to the imaging element 31 is disposed, so that the imaging element 31 can perform heat exchange with the second heat dissipation member 72, to improve a heat dissipation capability of the imaging element 31.

With reference to FIG. 11, it can be learned that, because the third heat exchange member 723 is close to the circuit board 32, the second protrusion part 722 is disposed on the third heat exchange member 723, so that heat generated by the imaging element 31 is transferred to the third heat exchange member 723, and it is ensured that a temperature of the imaging element 31 is within a proper range.

In some possible implementations, as shown in FIG. 12, an avoidance notch 83 may be further provided on the body 50, and the avoidance notch 83 is used to avoid the first heat dissipation member 71 and the heat pipe fitting 73 (for example, as shown in FIG. 2).

Correspondingly, the avoidance notch 83 is provided to avoid the heat pipe fitting 73, so that a length of the heat pipe fitting 73 can be reduced. This helps improve a heat transfer speed of the heat pipe fitting 73. In addition, during assembly of the optical engine 100, when the heat dissipation apparatus 70 moves toward the body 50 in the first direction, the body 50 does not interfere with the first heat dissipation member 71 and the heat pipe fitting 73, so that the heat dissipation apparatus 70 can be quickly docked with the body 50, and the assembly speed of the optical engine 100 can be further improved.

In some possible implementations, with reference to FIG. 2 and FIG. 3, it can be learned that the heat dissipation apparatus 70 may further include a fan 74 and an air duct 75. The second heat dissipation member 72 is disposed between the fan 74 and the body 50, and the fan 74 is disposed inside the air duct 75. The air duct 75 cooperates with the second heat dissipation member 72 to enclose a heat exchange cavity, an air intake vent, and an air exhaust vent. The air intake vent and the air exhaust vent are spaced apart in the first direction, and the air intake vent is close to the body 50. In a heat dissipation process, through cooperation between the fan 74 and the air duct 75, the heat dissipation capability of the second heat dissipation member 72 may be improved, and noise may be further reduced.

In descriptions of embodiments of this application, it should be noted that, unless otherwise clearly specified and limited, the term "mounting", "interconnection", or "connection" should be understood in a broad sense, for example, may be fastening, may be an indirect connection through an intermediate medium, or may be an internal connection between two elements or an interaction relationship between two elements. A person of ordinary skill in the art may understand specific meanings of the foregoing terms in embodiments of this application based on specific cases.

In the specification, claims, and accompanying drawings of embodiments of this application, the terms "first", "second", "third", "fourth", and the like (if existent) are intended to distinguish between similar objects but do not necessarily indicate a specific order or sequence.

## Claims

1. An optical engine, comprising a light source unit, an imaging unit, a reflective unit, a lens, and an integrally formed body, wherein
the body is provided with a first opening, a second opening, a third opening, and a fourth opening, and any one of the first opening, the second opening, the third opening, and the fourth opening communicates with an interior and an exterior of the body;
the light source unit is disposed at the first opening and is connected to the body, the reflective unit is disposed at the second opening and is connected to the body, the imaging unit is disposed at the third opening and is connected to the body, and the lens is disposed at the fourth opening and is connected to the body; and
the reflective unit is configured to reflect, to the imaging unit, light emitted by the light source unit, and the imaging unit is configured to output, based on the light reflected by the reflective unit, imaging light directed toward the lens.

2. The optical engine according to claim 1, wherein the light source unit comprises a light source and at least one collimating lens, the light source is connected to the body, at least a part of each collimating lens is disposed inside the first opening, and each collimating lens is disposed on an optical path between the light source and the reflective unit and is connected to the body.

3. The optical engine according to claim 2, wherein at least one annular step surface is provided on an inner wall of the first opening, and each annular step surface corresponds to one collimating lens and is used to support the corresponding collimating lens.

4. The optical engine according to claim 2 or 3, wherein a plurality of first protrusion parts are further disposed on the body, the plurality of first protrusion parts are disposed inside the first opening, each collimating lens corresponds to the plurality of first protrusion parts, and each first protrusion part is in contact with a side wall of the corresponding collimating lens.

5. The optical engine according to any one of claims 1 to 4, wherein the reflective unit comprises a bracket and a reflective element, the reflective element is disposed inside the body and is connected to the body by using the bracket, and the reflective element is configured to reflect, to the imaging unit, the light emitted by the light source unit.

6. The optical engine according to claim 5, wherein one of the reflective element and the bracket comprises a first hole, and the other one of the reflective element and the bracket comprises a first positioning part at least partially disposed inside the first hole.

7. The optical engine according to claim 5 or 6, wherein one of the bracket and the body comprises a second hole, and the other one of the bracket and the body comprises a second positioning part at least partially disposed inside the second hole.

8. The optical engine according to any one of claims 1 to 7, wherein the imaging unit comprises a circuit board and an imaging element, the circuit board is disposed outside the body and is connected to the body, the imaging element is connected to the circuit board and is disposed at the third opening, and the imaging element is configured to output, based on the light reflected by the reflective unit, the imaging light directed toward the lens.

9. The optical engine according to claim 8, wherein the body is further provided with an accommodating slot for accommodating at least a part of the imaging element, and the accommodating slot communicates with the interior of the body via the third opening.

10. The optical engine according to claim 8 or 9, wherein the optical engine further comprises an elastic component of an annular structure, and the elastic component is disposed between the body and the imaging element and is in contact with the imaging element and the body.

11. The optical engine according to any one of claims 1 to 10, wherein a part of the lens is disposed inside the fourth opening and is in threaded connection to the body.

12. The optical engine according to any one of claims 1 to 11, wherein the optical engine further comprises a heat dissipation apparatus, the heat dissipation apparatus comprises a first heat dissipation member, a second heat dissipation member, and a heat pipe fitting, one end of the heat pipe fitting is disposed inside the first heat dissipation member and is connected to the first heat dissipation member, the other end of the heat pipe fitting is disposed inside the second heat dissipation member and is connected to the second heat dissipation member, the first heat dissipation member covers the light source of the light source unit and is connected to the body, and the second heat dissipation member covers the imaging unit and is connected to the body.

13. The optical engine according to claim 12, wherein a projection of the body covers a projection of the first heat dissipation member in a second direction, the first heat dissipation member is disposed between two opposite ends of the body, a first direction is perpendicular to the second direction, and a direction of an optical axis of the lens is defined as the first direction.

14. The optical engine according to claim 12 or 13, wherein the second heat dissipation member comprises a second protrusion part, a projection of the second protrusion part overlaps a projection of the imaging element of the imaging unit in the first direction, and a gap exists between the second protrusion part and the imaging element or the second protrusion part is in contact with the imaging element.

15. A vehicle light module, comprising a housing and the optical engine according to any one of claims 1 to 14, wherein at least a part of the optical engine is disposed inside the housing.

16. A transportation means, comprising the optical engine according to any one of claims 1 to 14.
